# EUROPEAN PATENT APPLICATION

(11) **EP 4 437 841 A1**
(43) Date of publication of application: **02.10.2024**
(21) Application number: 23899079.0
(22) Date of filing: 26.10.2023
(51) Int. Cl.: A01K 1/03, A01K 1/035, A01K 1/01

(54) **PET TOILET**

(30) Priority: 16.02.2023 CN 202320231804 U
(71) Applicant: PETKIT NETWORK TECHNOLOGY (SHANGHAI) CO., LTD., Shanghai 201100 (CN)
(72) Inventor: SHI, Xin, Shanghai 201100 (CN); JIANG, Lihua, Shanghai 201100 (CN); MA, Yunxin, Shanghai 201100 (CN); MA, Xiaoqing, Shanghai 201100 (CN); ZHANG, Junchao, Shanghai 201100 (CN)
(74) Representative: Cabinet Beaumont
(86) International application number: PCT/CN2023/126830
(87) International publication number: WO 2024/169231

(57) **Abstract**

Provided is a pet toilet. The pet toilet includes a toilet, a receiving body, a cover plate, a drive member, and a control unit. The toilet is divided into an excretion region and a receiving region. The receiving body is detachably mounted in the receiving region. The receiving opening is formed on the upper side of the receiving body. The excrement in the toilet is dumped into the receiving body along the receiving opening. An end of the cover plate is connected to a rotating shaft and is flipped around the rotating shaft. The cover plate covers on the receiving body and is connected to the receiving body. A sealed chamber is enclosed by the cover plate and the receiving body. The drive member is mounted in the receiving region. The drive member is connected to the rotating shaft. The control unit is electrically connected to the drive member. The control unit is configured to drive the drive member to cause the rotating shaft to rotate.

## Description

This application claims priority to Chinese Patent Application No. 202320231804.7 filed Feb. 16, 2023, the disclosure of which is incorporated herein by reference in its entirety.

### TECHNICAL FIELD

The present application relates to the field of pet care technology, for example, a pet toilet.

### BACKGROUND

After a pet cat defecates, the excreted waste is combined with cat litter to form agglomerates. The agglomerates are stored in a pet toilet through an automatic device or manually. However, since the excreted waste has a certain odor, and at the same time, in the related art, receiving devices are all in the form of openings, the odor is discharged outward along the openings. As a result, the odor in a house is unacceptable. In the related art, chemical deodorization is used to neutralize the odor. However, chemicals need to be constantly replaced, and operation is complicated. If the pet owner is away from home for a long time and cannot handle the excrement, and the chemicals cannot be replaced, the odor in the house may be even worse after returning home.

### SUMMARY

The present application provides a pet toilet, which can solve the problem in the related art that the odor of a toilet receiving device is easy to escape to the outside world.

The present application provides a pet toilet. The pet toilet includes a toilet, a receiving body, a cover plate, a drive member, and a control unit. The toilet is divided into an excretion region and a receiving region. The receiving body is detachably mounted in the receiving region. The receiving opening is formed on the upper side of the receiving body. The excrement in the toilet is dumped into the receiving body along the receiving opening. An end of the cover plate is connected to a rotating shaft. The cover plate is configured to be flipped around the rotating shaft. The cover plate covers on the receiving body and is connected to the receiving body. A sealed chamber is enclosed by the cover plate and the receiving body. The drive member is mounted in the receiving region. The drive member is connected to the rotating shaft. The control unit is electrically connected to the drive member. The control unit is configured to drive the drive member to cause the rotating shaft to rotate.

### BRIEF DESCRIPTION OF DRAWINGS

FIG. 1 is a view of the opening of a receiving body according to an embodiment of the present application.
FIG. 2 is a view of the closure of a receiving body according to an embodiment of the present application.
FIG. 3 is a top view of a pet toilet according to an embodiment of the present application.
FIG. 4 is a view shows that a detection element and a drive structure are connected to a control unit respectively according to an embodiment of the present application.

### Reference list

- 100: toilet
- 101: excretion region
- 102: receiving region
- 1021: detection element
- 200: control unit
- 1: receiving body
- 11: upper connection plate
- 111: receiving opening
- 112: first engagement portion
- 113: second engagement portion
- 2: cover plate
- 21: protrusion portion
- 3: mounting bracket
- 4: rotating shaft
- 5: motor
- 6: closed detection magnet
- 7: open detection magnet

### DETAILED DESCRIPTION

In the description of the present application, terms "joined", "connected" and "secured" are to be understood in a broad sense unless otherwise expressly specified and limited. For example, the term "connected" may refer to "securely connected", "detachably connected" or "integrated", may refer to "mechanically connected" or "electrically connected" or may refer to "connected directly", "connected indirectly through an intermediary" or "connected inside two components" or "interaction relations between two components". For those of ordinary skill in the art, specific meanings of the preceding terms in the present application may be construed according to specific circumstances.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of the present application, it should be noted that the orientations or position relations indicated by terms such as "above", "below", "left", "right", "vertical", "horizontal", "inside", "outside" and the like are based on orientations or position relations shown in the drawings. These orientations or position relations are intended only to facilitate and simplify description of the present application, and not to indicate or imply that a device or element referred to must have such specific orientations or must be configured or operated in such specific orientations. Thus, these orientations or position relations are not to be construed as limiting the present application. In addition, the terms "first" and "second" are used only to distinguish between descriptions and have no special meaning.

To solve the problem that a pet owner is away from home for a long time, and the pet cat is unattended, a pet toilet is developed that may automatically pour the excrement in an excretion region into a receiving body of a receiving region. However, in the related art, since a pet toilet is often poured, the upper end of the designed receiving body is in an opening state. As a result, the odor of pet feces that previously entered a receiving body may escape from a receiving opening to the outside world, and the odor in a house is rather unpleasant. Generally, a chemical deodorization device is added to the receiving body to counteract the odor. However, the effect is not significant, and the device needs to be replaced frequently, which is extremely inconvenient.

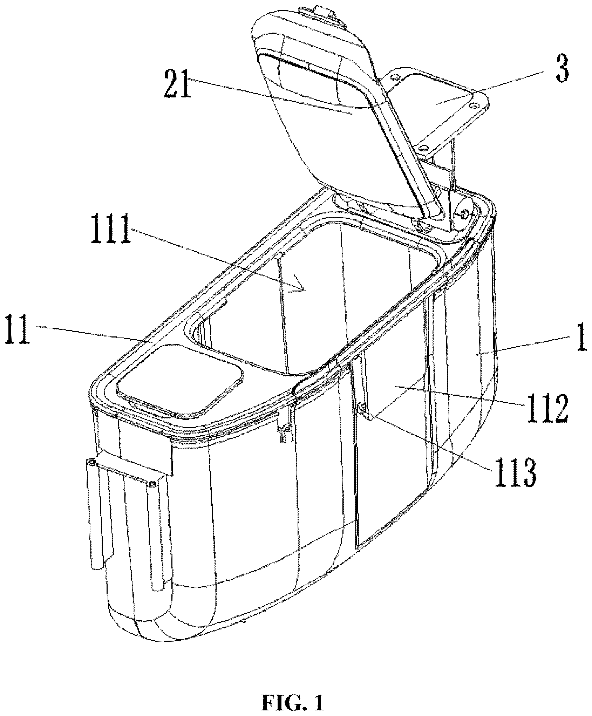

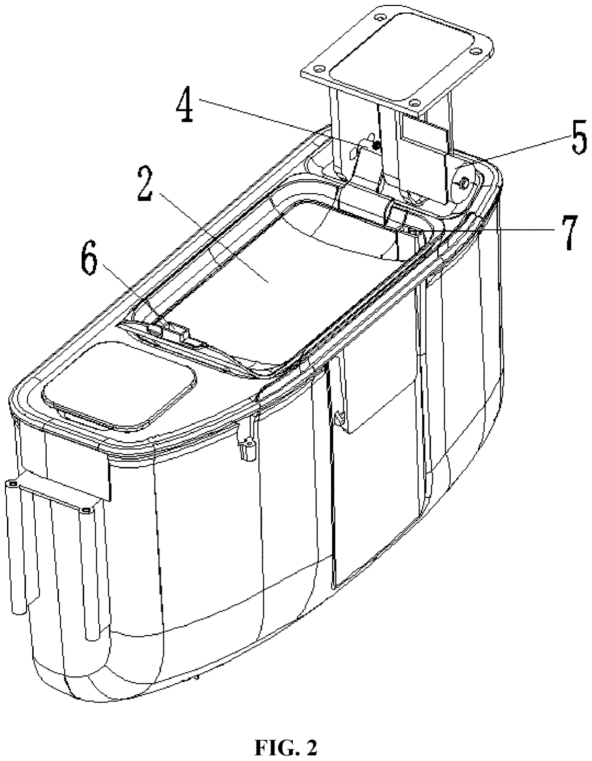

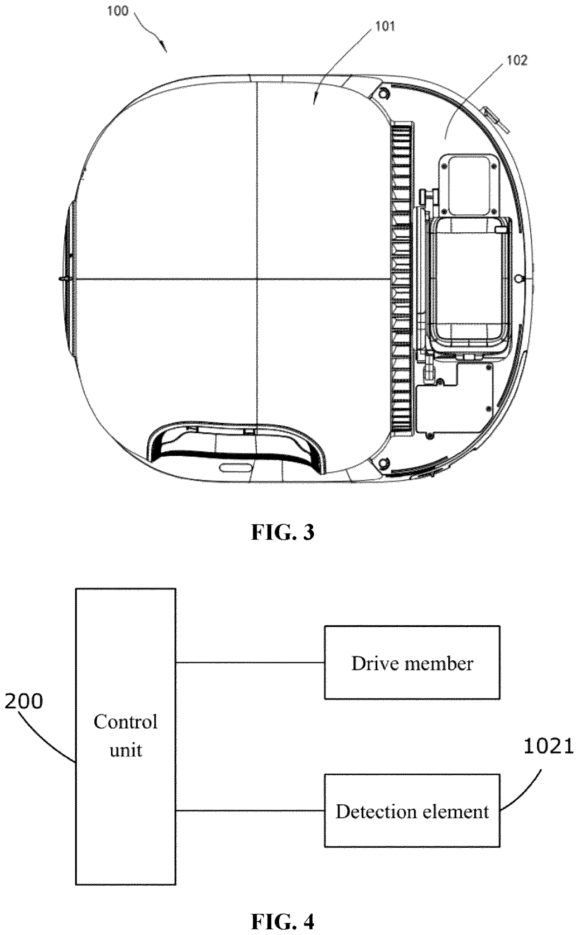

To solve the preceding problem, as shown in FIGS. 1 to 4, the present application provides a pet toilet. The pet toilet includes a toilet 100. The pet toilet 100 is divided into an excretion region 101 and a receiving region 102. A pet can enter the excretion region 101 to excrete. The pet toilet also includes a receiving body 1 and a cover plate 2. The receiving body 1 is detachably mounted in the receiving region 102. A receiving opening 111 is formed on the upper side of the receiving body 1. The excrement in the toilet 100 is dumped into the receiving body 1 along the receiving opening 111. An end of the cover plate 2 is connected to a rotating shaft 4. The cover plate 2 is flipped around the rotating shaft 4. The cover plate 2 may cover on and be connected to the receiving body 1. A sealed chamber is enclosed by the cover plate 2 and the receiving body 1. A drive member is mounted in the receiving region 102. The drive member drives the rotating shaft 4 to rotate through a control unit 200.

When detecting that the flange of the excretion region 101 is about to enter the receiving region 102, the control unit 200 may control the drive member to rotate and further drive the cover plate 2 to flip through the rotating shaft 4, so that the cover plate 2 is separated from the receiving opening 111. In this manner, all impurities and pet feces (usually also caked cat litter) may enter the sealed chamber through the receiving opening 111. Then, the control unit 200 may control the drive member to rotate reversely, and the cover plate 2 and the storage opening 111 may be buckled again to seal the sealed chamber. Thus, the odor is prevented from diffusing to the outside world, and the excrement is completely sealed and stored, thereby avoiding frequent replacement of deodorants.

After the pet excretes into the excretion region 101, the excrement may be poured into the receiving body 1. When detecting that the excrement enters the receiving region 102, the control unit 200 drives the rotating shaft 4 to rotate, so that an end of the cover plate 2 is driven to rotate, and the other end is tilted up to expose the receiving opening 111. At this time, the excrement enters the inside of the sealed chamber through the receiving opening 111. Then, the control unit 200 may reversely drive the drive member, so that the rotating shaft rotates. In this manner, the cover plate 2 is driven to be buckled on the receiving opening 111 to completely seal the sealed chamber, thus blocking the escape of the peculiar smell of the excrement and avoiding air pollution.

The drive member of the present application includes a mounting bracket 3. The mounting bracket 3 is connected to the inner wall of the toilet 100. A motor 5 is fixed on the mounting bracket 3. The output shaft of the motor 5 is connected to the rotating shaft 4. The flipping of the cover plate 2 is implemented through the forward rotation and reverse rotation of the motor 5 under the control of the control unit 200. The motor 5 is fixed on the inner wall of the toilet 100, so that a customer may pull out the receiving body 1 and clean the excrement inside in time. The cover plate 2 is connected to the motor 5 through the rotating shaft 4. Thus, when the customer pulls out the receiving body 1, the cover plate 2 is separated from the receiving body 1. The customer may directly observe whether the excrement inside needs to be poured.

The mounting bracket 3 of the present application is fixed to the inner wall of the toilet 100 through screws, achieving stable fixation of the motor 5 and the cover plate 2, and preventing the separation between the cover plate 2 and the receiving body 1 which may cause a gap between the cover plate 2 and the receiving opening 111 and result in odor leakage.

A sealant is disposed at the bottom of the cover plate 2 of the present application. The sealant abuts against the edge of the receiving opening 111. The preceding sealant is attached to the edge of the receiving opening 111 to seal the internal sealed chamber and enable the cover plate 2 to be better attached to the edge of the receiving opening 111, thereby isolating the odor and providing better airtightness for the sealed chamber.

A closed detection magnet 6 is disposed at the end of the upper side of the cover plate 2 far away from the rotating shaft 4. It is only the distal end that is provided with the closed detection magnet 6 to ensure that the cover plate 2 is in the lowest position, and there is no gap between the cover plate 2 and the receiving opening 111. A detection element 1021 is disposed in the receiving region 102. The detection element 1021 can detect the position of the closed detection magnet 6. After the detection element 1021 at the set position detects the position of the closed detection magnet 6, a signal that the cover plate 2 is in a completely closed state may be transmitted to the control unit 200, and at the same time, it can also avoid the situation that the cover plate 2 is unable to be buckled due to the excessive excrement in the receiving body 1. Early warnings are given to the customer in time through prompts of the control unit 200 and a mobile phone or a buzzer.

At the same time, an open detection magnet 7 is disposed at the end of the upper side of the cover plate 2 adjacent to the rotating shaft 4. The detection element 1021 can also detect the position of the open detection magnet 7. The open detection magnet 7 is disposed adjacent to the rotating shaft 4, so that whether the cover plate 2 rotates to the maximum rotation angle may be determined, thereby avoiding spilling the excrement out to the outside and not through the receiving opening 111.

A grip is formed on the side wall of the receiving body 1 of the present application. The customer may pull out the preceding receiving body 1 through the grip and empty the inner excrement.

The receiving body 1 is covered with an upper connection plate 11. The upper connection plate 11 is detachably connected to the receiving body 1. The upper connection plate 11 is formed with the receiving opening 111. A receiving bag may be sleeved between the upper connection plate 11 and the receiving body 1. When the receiving body 1 is taken out, the receiving bag and the excrement may be directly discarded at the same time to avoid the direct contact between the excrement and the receiving body 1.

First engagement portions 112 are formed on two sides of the upper connection plate 11. Second engagement portions 113 are formed on two side walls of the receiving body 1. Each of the first engagement portions 112 is buckled on the lower edge of a respective one of the second engagement portions 113. In this manner, the upper connection plate 11 may be detachably connected to the receiving body 1, so that the customer cleans the inside of the receiving body 1 in time.

The cover plate 2 protrudes downward to form a protrusion portion 21. The side wall of the protrusion portion 21 is adhered with a sealant. When the cover plate 2 is buckled, the preceding protrusion portion 21 may be inserted into the receiving opening 111. At the same time, the side wall of the cover plate 2 abuts against the edge of the receiving opening 111, and the gap is filled through the sealant to implement a better sealing effect.

## Claims

1. A pet toilet, comprising:
a toilet (100) divided into an excretion region (101) and a receiving region (102);
a receiving body (1) detachably mounted in the receiving region (102), wherein a receiving opening (111) is formed on an upper side of the receiving body (1), and excrement in the toilet (100) is dumped into the receiving body (1) along the receiving opening (111);
a cover plate (2), wherein an end of the cover plate (2) is connected to a rotating shaft (4) and is configured to be flipped around the rotating shaft (4), the cover plate (2) is configured to cover on the receiving body (1) and is connected to the receiving body (1), and a sealed chamber is enclosed by the cover plate (2) and the receiving body (1);
a drive member mounted in the receiving region (102), wherein the drive member is connected to the rotating shaft (4); and
a control unit (200) electrically connected to the drive member, wherein the control unit is configured to drive the drive member to cause the rotating shaft (4) to rotate.

2. The pet toilet according to claim 1, wherein the drive member comprises a mounting bracket (3) connected to an inner wall of the toilet (100) and a motor (5) fixed on the mounting bracket (3), and an output shaft of the motor (5) is connected to the rotating shaft (4).

3. The pet toilet according to claim 2, wherein the mounting bracket (3) is fixed on the inner wall of the toilet (100) through a screw.

4. The pet toilet according to claim 1, wherein a sealant is disposed at a bottom of the cover plate (2), and the sealant abuts against an edge of the receiving opening (111).

5. The pet toilet according to claim 1, wherein a closed detection magnet (6) is disposed at an end of an upper side of the cover plate (2) far away from the rotating shaft (4), a detection element (1021) is disposed in the receiving region (102), the detection element (1021) is configured to detect a position of the closed detection magnet (6), and the detection element (1021) is electrically connected to the control unit (200).

6. The pet toilet according to claim 5, wherein an open detection magnet (7) is disposed at an end of an upper side of the cover plate (2) adjacent to the rotating shaft (4), and the detection element (1021) is configured to detect a position of the open detection magnet (7).

7. The pet toilet according to claim 1, wherein a grip is formed on a side wall of the receiving body (1).

8. The pet toilet according to claim 1, wherein the receiving body (1) is covered with an upper connection plate (11), the upper connection plate (11) is detachably connected to the receiving body (1), and the upper connection plate (11) is formed with the receiving opening (111).

9. The pet toilet according to claim 8, wherein first engagement portions (112) are formed on two sides of the upper connection plate (11), second engagement portions (113) are formed on two side walls of the receiving body (1), and each of the first engagement portions (112) is buckled on a lower edge of one of the second engagement portions (113).

10. The pet toilet according to claim 4, wherein the cover plate (2) protrudes downward to form a protrusion portion (21), the protrusion portion (21) is inserted into the receiving opening (111), and a side wall of the protrusion portion (21) is adhered with a sealant.
